# EUROPEAN PATENT APPLICATION

(11) **EP 4 618 496 A1**
(43) Date of publication of application: **17.09.2025**
(21) Application number: 24163465.8
(22) Date of filing: 14.03.2024
(51) Int. Cl.: H04L 41/0894, H04L 41/5022, H04L 47/80, H04L 65/80, H04L 67/60, H04W 28/24

(54) **RADIO QUALITY OF SERVICE MANAGEMENT**

(71) Applicant: Robert Bosch GmbH, 70442 Stuttgart (DE)
(72) Inventor: Hassan, Khaled Shawky, 31157 Sarstedt (DE); Schneider, Peter, 71088 Holzgerlingen (DE); Jornod, Guillaume, 10243 Berlin (DE); Ramos Cantor, Oscar Dario, 31135 Hildesheim (DE); Stark, Maximilian, 20249 Hamburg (DE)

(57) **Abstract**

A method (10) for operating a device (50A), comprising:
- obtaining (11), from at least one application function hosted by the device, one or more quality of service requirement sets of the at least one application function;
- transmitting (12) a request message (48) to the network equipment, wherein the request message comprises the one or more quality of service requirement sets;
- receiving (13), from the network equipment, at least one response message (50) comprising at least one response to the request message, wherein the at least one response message comprises (i) an approval of the one or more quality of service requirement sets; and/or (ii) at least one alternative proposal for the quality of service requirement set;
- selecting (14) at least one quality of service requirement set and/or at least one alternative proposal for the quality of service requirement set based on one or multiple requirements of the application function; and
- transmitting (15) a decision message (52) to the network equipment.

## Description

### Technical Field

Aspects of the present specification relate to a computer implemented method for operating a device, a computer implemented method for operating a network equipment, and associated apparatuses, a system, and computer program elements.

### Background

Safety critical applications with communication between two different entities have strong requirements with respect to end-to-end communication service availability and reliability. At the application layer, safety mechanisms to monitor the fulfilment of these communication requirements are typically implemented to trigger specific actions in the event of a requirement violation. At the network layer, specific communication mechanisms are configured to provide the required availability and reliability according to contracted service level agreements.

In wireless communications, different mechanisms for the application to request a communication service with a given quality of service are available. 3GPP 5G-NR (Release 16) provides that an application can request the 5G network to establish a QoS flow supporting a packet error ratio and/or a maximum flow bit rate, as specified in 3GPP TS 23.434. According to this scheme, the network evaluates the QoS flow request against the current network conditions and decides to either provide the requested QoS flow if provisioning is possible, to provide an alternative QoS flow with lower guarantees if the original QoS flow cannot be provisioned, or to reject the request if no guarantees can be provided. However, the provision of QoS guarantees to applications in a wireless network can be further improved.

### Summary

The present disclosure relates to a computer implemented method for operating a device as defined in claim 1, a computer implemented method for operating a network equipment as defined in claim 6, a device as defined in claim 11, network equipment as defined in claim 12, a communications system as defined in claim 13, and a computer program as defined in claim 15. The dependent claims depict preferred embodiments of the computer implemented methods and the system. According to a first aspect, there is provided a computer implemented method for operating a device, comprising:
- obtaining, from at least one application function hosted by the device, one or more quality of service requirement sets of the at least one application function, wherein each quality of service requirement set defines at least one quality of service parameter requirement of a communication network that communicably couples the device to a network equipment;
- transmitting a request message to the network equipment, wherein the request message comprises the one or more quality of service requirement sets;
- receiving, from the network equipment, at least one response message comprising at least one response to the request message, wherein the at least one response message comprises (i) an approval of the one or more quality of service requirement sets; and/or (ii) at least one alternative proposal for the quality of service requirement set;
- selecting at least one quality of service requirement set and/or at least one alternative proposal for the quality of service requirement set based on one or multiple requirements of the application function; and
- transmitting a decision message to the network equipment, wherein the decision message comprises an instruction to the network equipment to configure resources based on at least one of the selected quality of service requirement sets, and/or at least one alternative proposal for the quality of service requirement sets.

When an application function provides some safety requirements, and the network answers with the requirements it can achieve (these requirements may be a subset of requirements provided by the application), the application can accept the provided subset, or can do another request with relaxed requirements. This can potentially lead to an infinite exchange of requirements if there is no convergence between the network capabilities and the requirements of the application.

An effect of the computer implemented method according to the first aspect is that a mechanism is provided for the network to provide a set of safety requirements achievable by the network considering the application function. Previously, the network only provided ways to request a QoS level without reliability levels. According to the present specification, if the network is not able to meet the QoS reliability requirements, the network answers with a requirement proposal as a subset of the requested requirements. For example, the network may respond with a proposal to reduce the time window, relax a time requirement, or remove a QoS indicator from a set of QoS indicators. The technique according to this specification also addresses the problem of cycles of request and response ("ping-pong") until an agreement is reached by allowing the network to include a plurality of requirements it can meet, instead of letting the application guess the requirements that the network can meet, as sometimes happens when the application relaxes its requirements without knowledge of the network capability.

According to a second aspect, there is provided a computer implemented method for operating a network equipment, comprising:
receiving, from a device, a request message comprising one or more quality of service requirement sets, wherein each quality of service requirement set defines at least one quality of service parameter requirement of a communication network that communicably couples the device to the network equipment;
determining whether, or not, the communication network can meet all quality of service parameter requirements of the device comprised in each of the quality of service requirement sets;
   if, for at least one or a subset of the quality of service requirement sets, the communication network cannot meet all of their respective quality of service parameter requirements:
   for at least one or a subset of the quality of service requirement sets for which the communication network cannot meet all quality of service parameter requirements, generating at least one alternative quality of service requirement set; and
   transmitting at least one response message to the device, wherein the message comprises the at least one alternative quality of service requirement set.

According to a third aspect, there is provided a device. The device comprises a radio interface, a processor, and a memory. The processor is configured to obtain, using at least one application function hosted by the processor, one or more quality of service requirement sets of the at least one application function, wherein each quality of service requirement set defines at least one quality of service parameter requirement of a communication network that communicably couples the device to a network equipment; wherein the processor is configured to transmit, via the radio interface, a request message to the network equipment, wherein the request message comprises the one or more quality of service requirement sets; wherein the radio interface is configured to receive, from the network equipment, at least one response message comprising at least one response to the request message, wherein the at least one response message comprises (i) an approval of one or more quality of service requirement sets; and/or (ii) at least one alternative proposal for the quality of service requirement set; wherein the processor is configured to select at least one quality of service requirement set and/or at least one alternative proposal for the quality of service requirement set based on the requirements of the application function; and wherein the processor is configured to transmit, via the radio interface, a decision message to the network equipment, wherein the decision message comprises an instruction to the network equipment to configure resources based on at least one of the selected quality of service requirement sets, and/or at least one alternative proposal for the quality of service requirement sets.

According to a fourth aspect, there is provided network equipment, comprising a radio interface, a processor, and a memory. The processor is configured to receive, from a device, a request message comprising one or more quality of service requirement sets, wherein each quality of service requirement set defines at least one quality of service parameter requirement of a communication network that communicably couples the device to the network equipment. The processor is configured to determine whether, or not, the communication network can meet all quality of service parameter requirements of the device comprised in each of the quality of service requirement sets.

If, for at least one or a subset of the quality of service requirement sets, the communication network cannot meet all of their respective quality of service parameter requirements, the processor is configured, for at least one or a subset of the quality of service requirement sets for which the communication network cannot meet all quality of service parameter requirements, to generate at least one alternative quality of service requirement set. The processor is configured to transmit, via the radio interface, at least one response message to the device, wherein the message comprises the at least one alternative quality of service requirement set.

According to a fifth aspect, there is provided a communications system. The communications system comprises a device according to the second aspect, and network equipment according to the fourth aspect, and a communications network configured to communicably couple the device to the network equipment.

According to a sixth aspect, there is provided a computer program comprising computer readable instructions which, when executed on a processor, is configured to cause the processor to perform the first aspect, or its embodiments discussed herein.

According to a seventh aspect, there is provided a computer program comprising computer readable instructions which, when executed on a processor, is configured to cause the processor to perform the third aspect, or its embodiments discussed herein.

### Brief Description of the Drawings

Exemplary embodiments are depicted in the figures, which are not to be construed as limiting the claims, and are explained in greater detail below. Where possible, like reference numerals denote analogous or like features in different figures.
- Fig. 1: schematically illustrates a computer implemented method according to a first aspect.
- Fig. 2: schematically illustrates a computer implemented method according to a second aspect.

- Fig. 3: schematically illustrates a system.
- Fig. 4: schematically illustrates signalling in a system according to embodiments discussed herein.
- Fig. 5: schematically illustrates device according to the second aspect.
- Fig. 6: schematically illustrates a system according to the fifth aspect.

### Detailed Description

As noted in the background section, in the current 3GPP standard (TS 23.434), the network evaluates the QoS flows request against the current network conditions and policies and decides to (1) provide the requested QoS flow if provisioning is possible, (2) offer alternative QoS flows with lower guarantees if the original QoS flow cannot be provisioned in this functionality is supported, or (3) reject the request if no QoS guarantee can be provided.

If the network conditions change and a QoS flow cannot be guaranteed, presently the network informs the application after changing or rejecting the QoS flow. For safety-critical applications, taking reactive measures after QoS flow degradation is notified might not be sufficient. Furthermore, the application requests and 5G network responses during QoS flow provisioning do not consider the duration of the QoS flow. This information is beneficial for both the safety critical application and the network. The application can establish safety measures according to the QoS flow guarantees and duration, and the network can make more efficient use of limited network resources by provisioning them only for the necessary time.

QoS guarantees are typically provided only for the domain controlled by communication network hence, if the safety critical application entities communicate end-to-end via multiple communication technologies, the QoS guarantees provided by a single network only consider a subset of the end to end communication. In this case, end to end aware control mechanisms are required at an application or a communication service perspective. Typically, having overarching communication network control mechanisms beyond systems is not practical, especially for communication services provided in wide area networks. Hence, the safety critical applications rely mostly on end-to-end monitoring mechanisms. The implementation of campus networks, where the communication services are bounded to a specific geographical area is a promising and practical scenario to provide safety critical applications over multiple communication technologies and safety support from the campus network.

In 3GPP, the requirements of functional safety were studied in TS 22.104 and further specification of the communication service availability, other QoS metrics to evaluate the "black channel" quality, and their relations are specified in TS 22.185 (for example, end-to-end latency, survival time, burst, and transfer interval definition and their relations). In the 3GPP architecture specifications, the end-to-end latency, survival time, burst, and transfer interval are as defined in TS 22.261. TS 23.501 of release 16 considered enabling mechanisms for such a time sensitive communication (TSC) application, which is related to and enables the functional safety requirements in TS 22.185. The 5G system, 5GS, introduced features that can be used for time sensitive communication represented in a TSC assistance information (TSCAI) field, which describes the TSC data flow and traffic which could be provided by the gNB to allow more efficiently scheduled radio resources for PDU sessions.

The knowledge of TSC traffic pattern is useful for 5G access network, 5G-AN, as it allows more efficient scheduling of QoS flows that have a periodic, deterministic traffic characteristic. The scheduling can be performed via configured grants, semi persistent scheduling, or with dynamic grants (all types of grants available in 5G networks for downlink and uplink). The TSCAI and its associated TSC assistance container (TSCAC) comprise the following:
**Assistance Information Description**

**Table 1. TSC assistance container format**

| | |
|---|---|
| Flow Direction | The direction of the TSC flow (uplink or downlink). |
| Periodicity | It refers to the time period between start of two data bursts. |
| Burst Arrival Time (BAT) | The latest possible time when the first packet of the data burst arrives at either the ingress of the RAN (downlink flow direction) or the egress of the UE (uplink flow direction). |
| Survival Time | Survival Time, as defined in TS 22.261, refers to the time period an application can survive without any data burst. |
| Burst Arrival Time Window (BAT Window) | Indicates the acceptable earliest and latest arrival time of the first packet of the data burst at either the ingress of the RAN (downlink flow direction) or the egress of the UE (uplink flow direction). |
| Capability for BAT adaptation | Indicates that the AF will adjust the burst sending time according to the network provided Burst Arrival Time offset for such an adaptation (*). |
| N6 Jitter Information | Jitter information associated with the Periodicity in downlink (**). |
| Periodicity Range (optional) (NOTE 4) | It indicates that the AF will adjust the periodicity and provides the acceptable range, formulated as lower bound and upper bound of the Period icity. |

| | |
|---|---|
| * for example, proactive RAN feedback for adaptation of burst arrival time and periodicity (RAN provides a Burst Arrival Time Offset and an adjusted periodicity as part of QoS flow adjustment). ** For the TSCAI enabler, the network rules may include performing jitter measurements by considering monitoring and periodically reporting the jitter information associated with the transmission periodicity (if it happens). In case of indicated jitter, the measured values should be fed back to the RAN to be handled (for example, more robustness, enhanced resource allocation and the like). | |

Release 18 introduced further QoS parameters, or newer mappings between safety-related requirements and quality of service - for example the parameters maximum packets per interval, minimum packets per interval, maximum payload size, minimum payload size, maximum consecutive loss tolerance, maximum latency variation, maximum miss ordering, and next hop information. These parameters can all be considered in addition to previous QoS flow requirements such as minimum bandwidth, maximum latency (packet delay budget), and maximum loss (packet error rate).

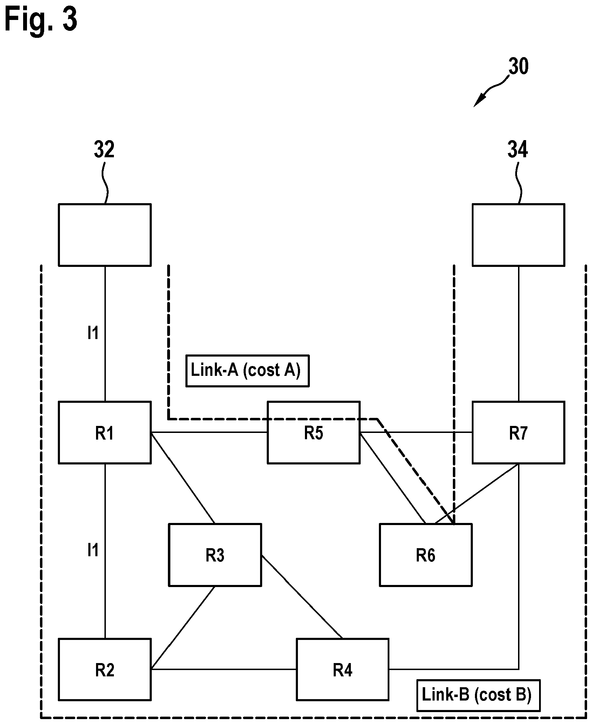

Accordingly, this specification proposes a mechanism for the application to exchange QoS assistance information with the communication network which can be fulfilled with an explicitly negotiated reliability metric in the network overview illustrated in **Fig. 3** of this specification. Present interfaces and protocols only allow the sharing of QoS information without an explicit guarantee as to how reliably the QoS parameters are fulfilled by the network. By extending existing QoS interfaces with explicit reliability metrics, applications with high reliability requirements (such as safety-critical applications such as tele-operated driving) can judge whether a network will meet their requirements in terms of QoS functionality and also in terms of reliability. Additionally, the extension includes the definition of a variable time interval in which the respective QoS requirements need to be fulfilled with the requested level of reliability.

Furthermore, if the initial request of the application cannot be matched by the network, the present specification discusses a protocol that negotiates feasible QoS set and reliability requirements to fit the current network capabilities with at least a minimum viable set of application requirements.

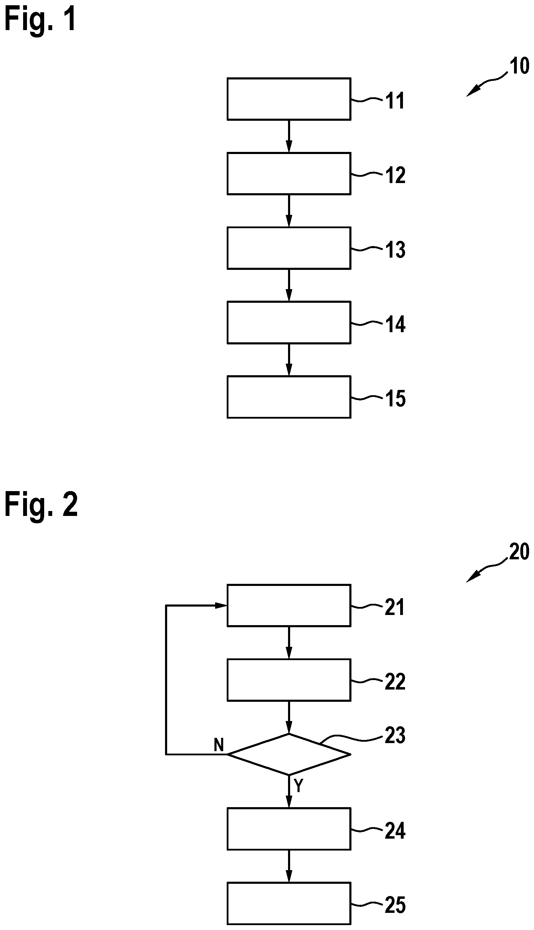

Fig. 1 schematically illustrates a computer implemented method according to the first aspect.

According to a first aspect, there is provided a computer implemented method (10) for operating a device 50A, comprising:
- obtaining 11, from at least one application function hosted by the device, one or more quality of service requirement sets of the at least one application function, wherein each quality of service requirement set defines at least one quality of service parameter requirement of a communication network that communicably couples the device to a network equipment;
- transmitting 12 a request message 48 to the network equipment, wherein the request message comprises the one or more quality of service requirement sets;
- receiving 13, from the network equipment, at least one response message 50 comprising at least one response to the request message, wherein the at least one response message comprises (i) an approval of the one or more quality of service requirement sets; and /or (ii) at least one alternative proposal for the quality of service requirement set;
- selecting 14 at least one quality of service requirement set and/or at least one alternative proposal for the quality of service requirement set based on one or multiple requirements of the application function; and
- transmitting 15 a decision message 52 to the network equipment, wherein the decision message comprises an instruction to the network equipment to configure a resource based on at least one of the selected quality of service requirement sets, and/or at least one alternative proposal for the quality of service requirement sets.

For example, a quality of service requirement set may comprise one, or any combination, of quality of service parameters defined in the following list: latency, packet error rate, jitter, mean time to failure (MTTF), periodicity, burst arrival time, survival time, burst arrival time window, capability for burst arrival time adaptation, N6 jitter information, periodicity range, and/or a minimum or maximum time window of a quality of service grant. However, a skilled person will appreciate that other parameters not included in this list that affect quality of service of an application which is operated over a network can also be included in the definition of a quality of service parameter.

According to an embodiment, each quality of service requirement set further comprises a fault definition for each quality of service requirement parameter, wherein the fault definition defines a domain within which the quality of service requirement parameter is satisfied, and outside of which the quality of service requirement parameter is not satisfied.

For example, each QoS parameter comprises a fault definition. One example of a fault definition is a deviation from a time deadline that a specific application still considers to be acceptable (and not a fault). In an example, the fault definition is a binary domain (in other words, before a given time deadline, no fault exists, and after a given time deadline, a fault exists). In another example, the fault definition is a continuous or multi-step score. In other words, as a given time deadline is approached, the fault definition increases in value in a stepped or gradual manner.

In a particular example, for the QoS parameter "maximum target latency", the fault definition is "greater than 100 ms in more than one out of five subsequent transmissions from the application source to the application sink".

According to an embodiment each quality of service requirement set further comprises a reliability requirement for each quality of service requirement parameter; comprising a statistical measure for which no fault according to the fault definition will occur.

A reliability requirement for a QoS parameter is a common reliability metric expressing a statistical probability with which no fault (according to the "fault definition") will occur. One example of a reliability requirement that can be assigned to one or more QoS parameters is mean time to failure (MTTF). In an embodiment, at least one quality of service requirement in the quality of service requirements set comprises a reliability requirement defined by the mean time to failure. In an example, the mean time to failure of one quality of service requirement in the quality of service requirements set is that the mean time to failure should be greater than 1000 hours, for example.

According to an example, the reliability metric is the rate of occurrence of failure (ROCOF). According to an example, the reliability metric is the probability of failure on demand (POFOD). According to an example, a first quality of service requirement comprised in the quality of service requirement set comprises a first reliability requirement and a second quality of service requirement parameter comprised in the quality of service requirement set comprises a second reliability requirement, wherein the first reliability requirement and the second reliability requirement are different.

According to an embodiment, the quality of service requirement set further comprises a time window for each tuple of quality of service requirement parameter, fault definition, and reliability requirement, wherein the time window defines a time period during which the network must provide a quality of service guarantee for the each quality of service requirement set.

For example, one tuple is at least one quality of service parameter plus one fault definition plus one reliability requirement.

Therefore, a specific example of a time window per tuple is: "for the next 15 seconds, for the specified QoS parameter, a given fault definition and given reliability requirement should be met. Another specific example of a time window per tuple is "for the specified QoS parameter, a given fault definition and given reliability requirement should be met from date-time [start: 2023/05/21-09:05:21] to [end: 2023/05/21-09:05:30]. Table 2 below gives a specific example for a bundle of information considered to be "application requirements" or "network capabilities".

**Table 2: A bundle of application requirements.**

| **QoS parameter** | **Fault Definition** | **Reliability Requirement** | **Time Window** |
|---|---|---|---|
| Latency | Latency > 100ms within more than 1 out of 5 retransmissions | MTTF > 1000h | 30sec |
| Packet Error Rate (PER) | PER > 0.01 | MTTF > 10000h | 15sec |
| Jitter | Jitter > 15ms within more than 3 out of 9 subsequent retransmissions | MTTF > 1000h | 15sec |

According to an exemplary and general description of the technique of the present specification, an application communicates its application requirements to the network. The network answers with its ability to (1) fulfil these requirements for the requested time interval, in other words, the network can currently meet the application requirements without limitations, or (2) the network answers such that it can only fulfil a limited subset of the application requirements for a certain time interval; in a worst-case the subset can be zero, for example, no application can be fulfilled by the network. Then, the application can accept one or more of the offers, or abort the process.

According to an embodiment of the first aspect, there is provided obtaining, from the at least one application function, one or more or an earliest processing deadline and a latest processing deadline. The earliest processing deadline is a time relative to the transmission of the request message from the device when a response from the network equipment when the request message can be received at the device; and/or
the latest processing deadline is a time relative to the transmission of the request message from the device when the last response message from the network equipment can be received at the device.

According to an embodiment, the method comprises mapping the at least one alternative proposal for the quality of service requirement set to a corresponding nearest entry of a quality of service index; and wherein the at least one alternative proposal for the quality of service requirement set transmitted in the decision message comprises transmitting the corresponding nearest entry to the network equipment.

According to an embodiment, the at least one quality of service parameter requirement is one, or any combination of, the following Time Sensitive Communication Assistance Info, TSCAI, Maximum Packets per Interval, Minimum Packets per Interval, Maximum Payload Size, Minimum Payload Size, Maximum Conservative Loss Tolerance, Maximum Latency Variation, Maximum Misordering, Next hop information, Minimum Bandwidth, Maximum Latency, Maximum Loss.

According to an example, if no proposals for the quality of service requirement are acceptable to the application, the process of negotiating the QoS grant is aborted.

According to an embodiment, the device is comprised within a vehicle, an automated guided vehicle, an Internet of Things device, or an uncrewed aerial vehicle.

Fig. 2 schematically illustrates a computer implemented method according to the second aspect.

According to a second aspect, computer implemented method 20 for operating a network equipment, comprises:
- receiving 21, from a device, a request message 48 comprising one or more
   quality of service requirement sets, wherein each quality of service requirement set defines at least one quality of service parameter requirement of a communication network that communicably couples the device to the network equipment;

- determining 22 whether, or not, the communication network can meet all quality of service parameter requirements of the device comprised in each of the quality of service requirement sets;
   if 23, for at least one or a subset of the quality of service requirement sets, the communication network cannot meet all of their respective quality of service parameter requirements:
   for at least one of the quality of service requirement sets for which the communication network cannot meet all quality of service parameter requirements, generating 24 at least one alternative quality of service requirement set; and
   transmitting 25 at least one response message 50 to the device, wherein the message comprises the at least one alternative quality of service requirement set.

The present specification focuses on the case where the network cannot fulfil the request requirements. In this case, the network evaluates its capabilities and provides a set of options to the application. These options are combinations of relaxed requirements that it can meet. The combinations are generated in the following way: Firstly, each value is changed to yield a vector of values. Secondly, the feasibility of the combinations of these values is then evaluated by the network. Thirdly, non-feasible combinations are discarded.

According to an embodiment of the second aspect, generating at least one alternative quality of service requirement set comprises:
for each quality of service requirement parameter in the respective quality of service requirement set that does not meet all quality of service parameter requirements:
converting each quality of service requirement parameter into a quality of service requirement vector comprising a predefined number of entries;
evaluating the feasibility of providing a quality of service grant in the network based on values defined by a plurality of combinations taken from the respective quality of service requirement vector; and
removing non-feasible combinations from the respective quality of service requirement vector.

According to an embodiment of the second aspect, generating at least one alternative quality of service requirement set further comprises:
for at least one respective quality of service requirement set that does not meet all quality of service parameter requirements:
removing at least one quality of service requirement parameter from the at least one respective quality of service requirement set; and/or adding at least one quality of service requirement parameter to the at least one respective quality of service requirement set.

For example, demonstrating the generation of a subset of the application requirements for certain time interval over to parameters with coarse granularity, a first step creates QoS values from request received from the application. The request received from the application corresponds to the signalling defined by the first aspect above, or its embodiments.

**Table 3: A bundle of two QoS requirements**

| **QoS parameter** | **Fault Definition** | **Reliability Requirement** | **Time Window** |
|---|---|---|---|
| Latency | Latency > 100ms within more than 1 out of 5 retransmissions | MTTF > 1000h | 30sec |
| Packet Error Rate (PER) | PER > 0.01 | MTTF > 10000h | 15sec |

In a first step, for each QoS parameter in the bundle, a single value corresponding to the fault definition, the reliability requirement, and/or the time window for example, are each expanded into a value vector corresponding to different options or restrictions of the QoS requirement.

Latency Value Vector:
100 => [50, 100, 150];
MTTF => [100, 1000, 10000]
Time Window => [20, 30, 40]

PER Value Vector:
0.01 => [0.1, 0.01, 0.001]
MTTF => [1000, 10000, 100000]
Time Window 15 => [5, 15, 20]

In a second step, the value vectors are evaluated with all reasonable permutations or combinations of relevant QoS parameters with reliability requirements. In an embodiment, the value vectors are evaluated with a sampling of relevant QoS parameters with reliability requirements. According to an example, combinations of the value vectors are sampled using a Monte Carlo approach.

Some of the parameters and requirements are codependent. For example, MTTF and time window are coupled. If one increases, typically the other will go down if no additional resources such as redundant channels or active fault compensation are included in the evaluation. According to an example, the combinational algorithm can optionally use parameter coupling models to identify theoretically feasible combinations of values.

In a third step, combinations of the value vectors based on the capabilities of the network are filtered out. For example, known latency values that cannot be achieved by the network can be removed from the set of combinations.

In another example, from the theoretically feasible set of options, the options that the network cannot achieve through a self reconfiguration for the requested time window are filtered out. The remaining results (for example, feasible combinations that the network can provide) are returned to the application. The determination as to whether, or not, the network can provide certain combinations is, in an example, provided according to test data obtained a priori, monitored logs of previously successful or unsuccessful combinations, or a simulation of the network.

Counterintuitively, the network may evaluate values that are more stringent than the request from the application. In an example, values evaluated by the network might be achievable by the network when combined with relaxed requirements (such as smaller latency with a higher packet error ratio compared to the request). When all requirements are more stringent than the request (which the network cannot achieve), the resulting option can be discarded with no evaluation.

The reader may refer to the table comprising example 1 at the end of this written description for example of a request of an application, and an answer of the network, illustrating how specific values are changed based on the capabilities of the network.

In example 1, the network is not able to provide the requirement requested by the application. Subsequently, the network provides a plurality of options based on the request of the application. In example 1, five options are provided. In the first option, the MTTF of the jitter has been reduced to 100 hours. In the second option, the time window of the latency requirement is reduced to 15 seconds. In the third option, the time window of the latency requirement is increased to 50 seconds, but the MTTF is reduced to 100 hours. In the fourth option, the MTTF and time window are kept but the latency increased to 90ms. Finally, in the fifth option of example 1, the PER requirement has been relaxed.

According to an example, a bandwidth limited handshake is implemented between the application and the network. To reduce the complexity and the bandwidth used for the exchange discussed previously, the network is configured to send a predetermined number of options to the device hosting the application. The predetermined number of options is implementation dependent, and configurable. According to an embodiment, the predetermined number of options may change as a function according to detected network conditions.

According to an example, pre-defined parameter granularity is provided. Granularity may be defined as a rounding unit. In embodiments, with a latency granularity of 5ms, possible values may be ≥ 0ms, ≥ 5ms, ≥ 10ms, ≥ 15ms and so on. For example, to reduce the complexity and the bandwidth used for this exchange, the granularity of the parameters is set a priori.

**Table 4: Pre-defined parameter granularity**

| **Parameter** | **Granularity** |
|---|---|
| Latency | 5ms |
| PER | Order of magnitude |
| Jitter | 0.5ms |
| MTTF | Order of magnitude |
| Time Window | second |

According to an embodiment, a cost assignment per combination or option may be computed. For example, the network may provide, to the application function, the cost of using each option provided by the network (in terms of money to use the network option, or quality of service usage tokens, or the like). Even when the network can fulfil the requirements required by the application, it provides other alternatives so that the application can consider the costs when using an option.

According to a further embodiment, a catalogue index is provided based on handshake negotiation. For example, a catalogue of quality of service values is provided both to the network and to the device hosting the application as previously standardised between the network and the device hosting the application. In this case, the network can communicate one or more potential bundles of values acceptable to a specific application by transmission of a short identifier referencing the standardised catalogue of quality of service values.

Fig. 3 schematically illustrates a system 30.

For example, the system 30 may be a campus network. In particular, an application source 32 is configured to attempt to communicate with an application sink 34. A network is comprised of a plurality of network nodes R1 - R7. A first link A is defined in the system 30 as being between the application source 32 and application sink 34 via network nodes R1, R5, R6, and R7. The link A is associated with a cost A. A second link B is defined as being between the application source 32 and application sink 34 via nodes R1, R2, R4, and R7. The second link B is associated with a cost B. A skilled person will appreciate that the system topology shown in Fig. 3 is exemplary, and a practical system can have more or fewer nodes, arranged in a different topology.

According to an embodiment of the second aspect, there is provided receiving a decision message 52 from the device comprising an instruction to the network equipment to configure resources based on at least one of a quality of service requirement set selected at the device, and/or at least one alternative proposal for the quality of service requirement set.

According to an embodiment of the second aspect, mapping the at least one alternative proposal for the quality of service requirement set to a corresponding nearest entry of a quality of service index; and wherein the at least one alternative proposal for the quality of service requirement set transmitted in the response message comprises transmitting the corresponding nearest entry to the device.

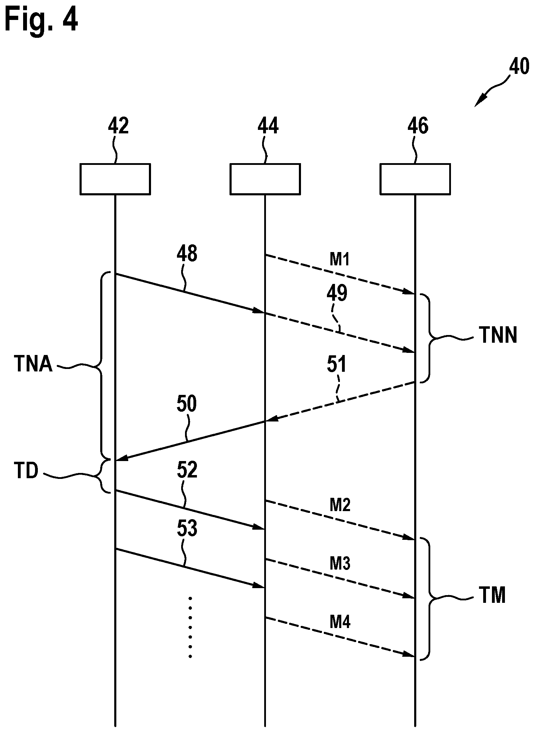

Fig. 4 schematically illustrates signalling in a system according to embodiments discussed herein.

In Fig. 4, element 42 represents an application, element 44 represents lower layers, and element 46 represents a network.

According to an embodiment, a QoS or reliability requirements request 48, 49 is transmitted to the network. Optionally, lower layers transfer measurement reports M1 on a continual or sampled basis to the network. The network computes one, or more, positive responses and proposed adaptations which are transmitted to the lower layers with signal 51. The time TNN may represent the negotiation time the network 46 requires between the reception of transfer measurement reports M1 and the transmission of signal 51 back to the lower layers 44.

The lower layers 44 transmit the proposed positive response and proposed network adaptation 51 to the application at signal 50 as a QoS reliability requirements response. The time TNA between the initial transmission of the QoS reliability requirements request 48 and the reception of the QoS reliability requirements response 50 is the negotiation time.

The application decides on a bundle of values forming the QoS guarantee proposed by the network. The application transmits a decision or chosen option with message 52 to the lower layers 44. The time TD represents the time that the application 42 requires to decide on the chosen option. Following transmission of the chosen option, the application 42 assumes that the network 46 will configure itself according to the option chosen by the application. According to an embodiment, the application 42 may wait to receive an acknowledgement that the configuration has taken place (not shown). The application then transmits the data with message 53 pursuant to the negotiated quality guarantee. The message 53 may then be provided by the lower layer(s) 44 to the network 46 and sent through the network 46.

During period TM, periodic or on demand network measurements monitoring the reliability requirements may be provided by the lower layers 44 to the network 46 in messages M2, M3, M4, for example.

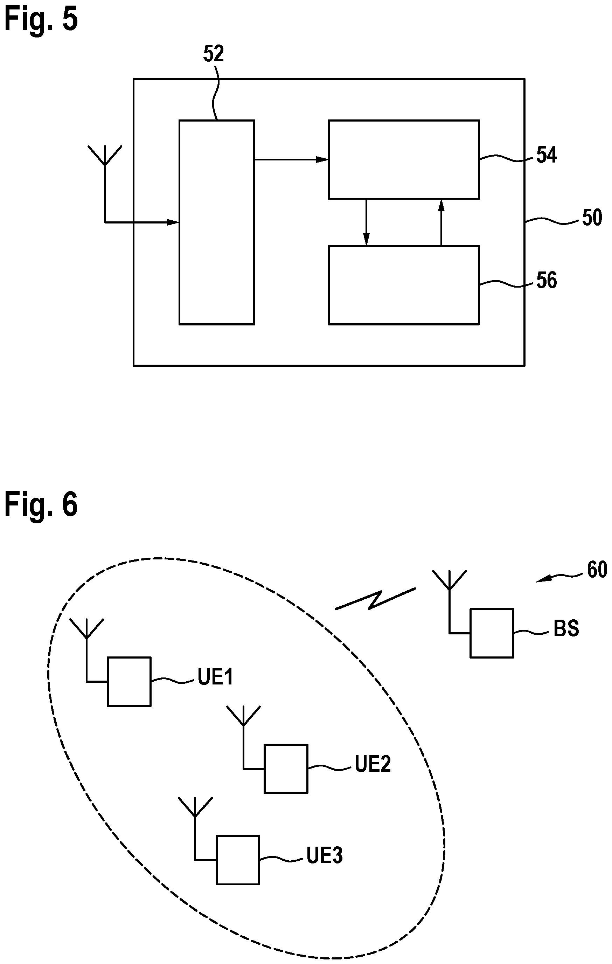

Fig. 5 schematically illustrates a device according to the third aspect.

According to a third aspect, there is provided a device. The device comprises a radio interface 52, a processor 54, and a memory 56.

The processor 54 is configured to obtain, using at least one application function hosted by the processor, one or more quality of service requirement sets of the at least one application function, wherein each quality of service requirement set defines at least one quality of service parameter requirement of a communication network that communicably couples the device to a network equipment; wherein the processor is configured to transmit, via the radio interface, a request message to the network equipment, wherein the request message comprises the one or more quality of service requirement sets; wherein the radio interface is configured to receive, from the network equipment, at least one response message comprising at least one response to the request message, wherein the at least one response message comprises (i) an approval of one or more quality of service requirement sets; and/or (ii) at least one alternative proposal for the quality of service requirement set; wherein the processor is configured to select at least one quality of service requirement set and/or at least one alternative proposal for the quality of service requirement set based on one or multiple requirements of the application function; and wherein the processor is configured to transmit, via the radio interface, a decision message to the network equipment, wherein the decision message comprises an instruction to the network equipment to configure resources based on at least one of the selected quality of service requirement sets, and/or at least one alternative proposal for the quality of service requirement sets.

According to an example a device is a user equipment.

According to a fourth aspect, there is provided network equipment, comprising a radio interface, a processor, and a memory.

The processor is configured to receive, from a device, a request message comprising one or more quality of service requirement sets, wherein each quality of service requirement set defines at least one quality of service parameter requirement of a communication network that communicably couples the device to the network equipment. The processor is configured to determine whether, or not, the communication network can meet all quality of service parameter requirements of the device comprised in each of the quality of service requirement sets. If, for at least one or a subset of the quality of service requirement sets, the communication network cannot meet all of their respective quality of service parameter requirements, the processor is configured, for at least one (or a subset) of the quality of service requirement sets for which the communication network cannot meet all quality of service parameter requirements, to generate at least one alternative quality of service requirement set. The processor is configured to transmit, via the radio interface, at least one response message to the device, wherein the message comprises the at least one alternative quality of service requirement set.

The radio interface may comprise a modem, front end, and antenna circuitry for accessing one or more of a fifth generation system, a long term evolution system (LTE), an LTE-advanced system, a high speed packet access system, a universal mobile telecommunications system, an evolved-UTRAN, a global system for mobile communication (GSM), an EDGE system, an IEEE 802.11 system, and the like. According to some embodiments, the mobile communication system may be a V2N network, a C-V2X system. The mobile communication system may support at least two communication modes, such as PC5, which is used between vehicles, and Uu, which is used between vehicles and base stations.

Fig. 6 schematically illustrates a system according to the fifth aspect.

According to the fifth aspect, there is provided a system comprising a device according to the first aspect and network equipment according to the second aspect, wherein a communications network is configured to communicably couple the device to the network equipment. According to an embodiment, the system is a campus communications network.

According to an embodiment of the fifth aspect, the device is comprised within a vehicle, an automated guided vehicle, an Internet of Things device, or an uncrewed aerial vehicle.

According to a sixth aspect, there is provided a computer program comprising computer readable instructions which, when executed on a processor, is configured to cause the processor to perform the first aspect, or its embodiments.

According to a seventh aspect, there is provided a computer program comprising computer readable instructions which, when executed on a processor, is configured to cause the processor to perform the second aspect, or its embodiments.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

### Example 1

**Request of the application**

| **QoS Parameter** | **Fault Definition** | **Reliability Requirement** | **Time-window** |
|---|---|---|---|
| Latency | Latency > 100ms within more than 1 out of 5 subsequent transmissions | MTTF > 1000h | 30sec |
| Packet error rate (PER) | PER > 10 ^-2 | MTTF > 10000h | 30sec |
| Jitter | Jitter > 15ms within more than 3 out of 9 subsequent transmissions | MTTF > 1000h | 30sec |

Answer of the Network: (the specific value that changed is ringed)

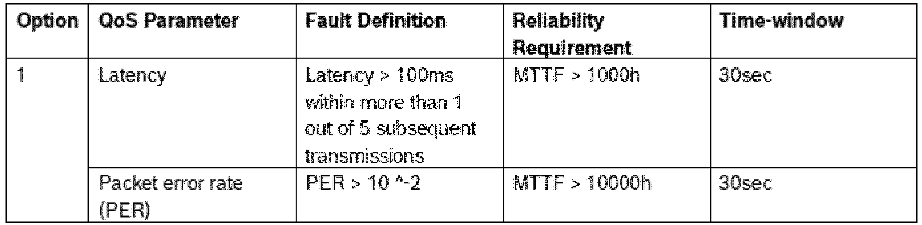

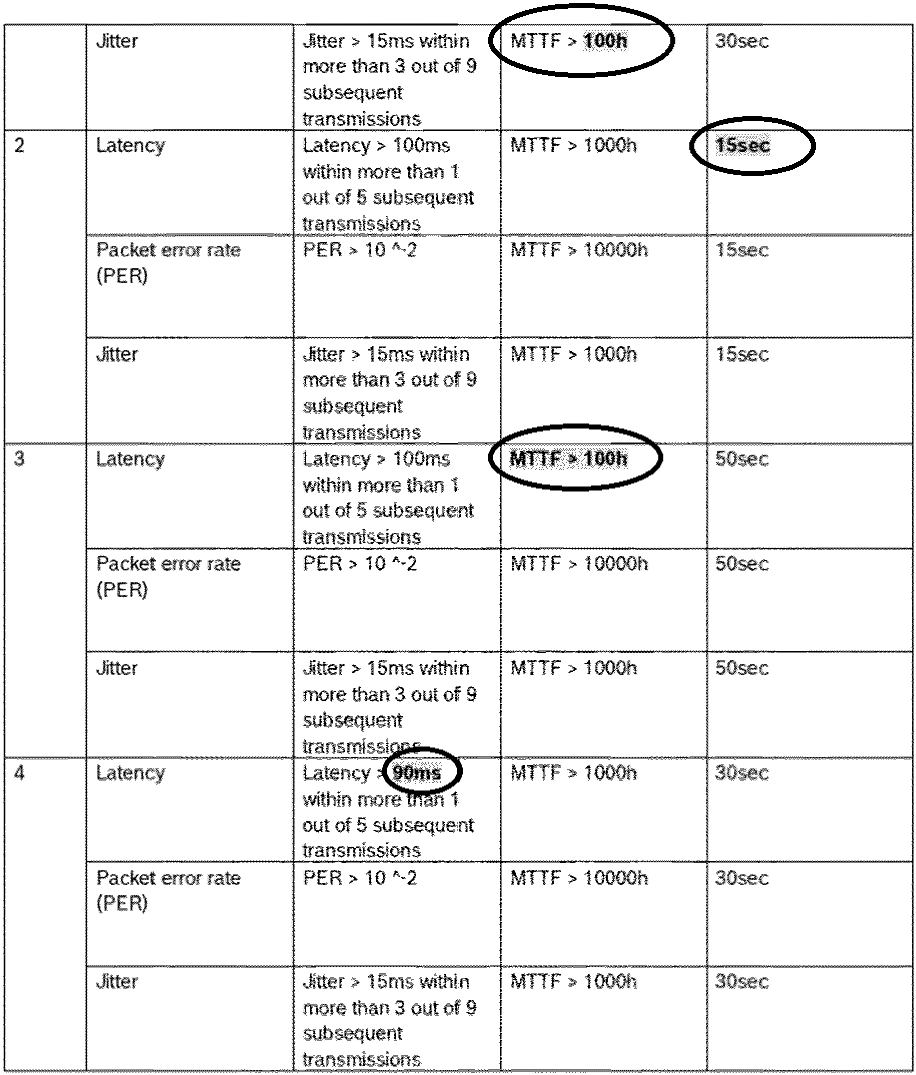

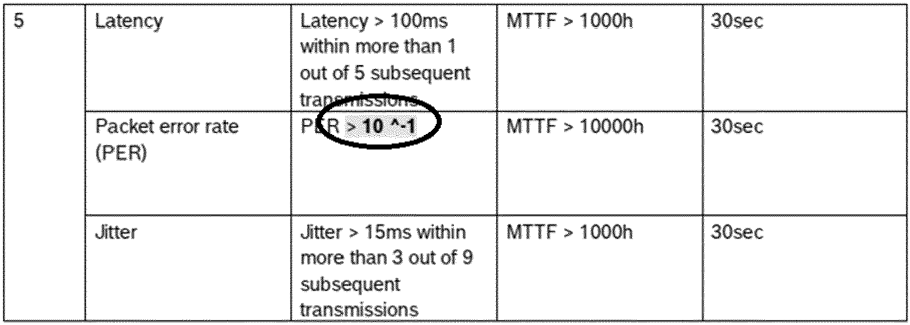

## Claims

1. A computer implemented method (10) for operating a device (50A), comprising:
- obtaining (11), from at least one application function hosted by the device, one or more quality of service requirement sets of the at least one application function, wherein each quality of service requirement set defines at least one quality of service parameter requirement of a communication network that communicably couples the device to a network equipment;
- transmitting (12) a request message (48) to the network equipment, wherein the request message comprises the one or more quality of service requirement sets;
- receiving (13), from the network equipment, at least one response message (50) comprising at least one response to the request message, wherein the at least one response message comprises (i) an approval of the one or more quality of service requirement sets; and/or (ii) at least one alternative proposal for the quality of service requirement set;
- selecting (14) at least one quality of service requirement set and/or at least one alternative proposal for the quality of service requirement set based on one or multiple requirements of the application function; and
- transmitting (15) a decision message (52) to the network equipment, wherein the decision message comprises an instruction to the network equipment to configure resources based on at least one of the selected quality of service requirement sets, and/or at least one alternative proposal for the quality of service requirement sets.

2. The computer implemented method (10) according to claim 1, further comprising:
- mapping the at least one alternative proposal for the quality of service requirement set to a corresponding nearest entry of a quality of service index; and wherein the at least one alternative proposal for the quality of service requirement set transmitted in the decision message comprises transmitting the corresponding nearest entry to the network equipment.

3. The computer implemented method (10) according to one of the preceding claims,
wherein the at least one quality of service parameter requirement is one, or any combination of, the following: latency, packet error rate, jitter, mean time to failure (MTTF), periodicity, burst arrival time, survival time, burst arrival time window, capability for burst arrival time adaptation, N6 jitter information, periodicity range, and/or a minimum or maximum time window of a quality of service grant; and/or
wherein the at least one quality of service parameter requirement is one, or any combination of, the following: Time Sensitive Communication Assistance Info (TSCAI), Maximum Packets per Interval, Minimum Packets per Interval, Maximum Payload Size, Minimum Payload Size, Maximum Conservative Loss Tolerance, Maximum Latency Variation, Maximum Misordering, Next hop information, Minimum Bandwidth, Maximum Latency, Maximum Loss.

4. The computer implemented method (10) according to one of the preceding claims,
wherein each quality of service requirement set further comprises at least one of:
a fault definition for each quality of service requirement parameter, wherein the fault definition defines a domain within which the quality of service requirement parameter is satisfied, and outside of which the quality of service requirement parameter is not satisfied;
a reliability requirement for each quality of service requirement parameter; comprising a statistical measure for which no fault according to the fault definition will occur; and/or a time window for each tuple of quality of service requirement parameter, fault definition, and reliability requirement, wherein the time window defines a time period during which the network must provide a quality of service guarantee for the each quality of service requirement set.

5. The computer implemented method (10) according to one of the preceding claims,
wherein the device is comprised within a vehicle, an automated guided vehicle, an Internet of Things device, or an uncrewed aerial vehicle.

6. A computer implemented method (20) for operating a network equipment, comprising:
receiving (21), from a device, a request message (48) comprising one or more
quality of service requirement sets, wherein each quality of service requirement set defines at least one quality of service parameter requirement of a communication network that communicably couples the device to the network equipment;
determining (22) whether, or not, the communication network can meet all quality of service parameter requirements of the device comprised in each of the quality of service requirement sets;
if (23), for at least one or a subset of the quality of service requirement sets, the communication network cannot meet all of their respective quality of service parameter requirements:
for at least one or a subset of the quality of service requirement sets for which the communication network cannot meet all quality of service parameter requirements, generating (24) at least one alternative quality of service requirement set; and
transmitting (25) at least one response message (50) to the device, wherein the message comprises the at least one alternative quality of service requirement set.

7. The computer implemented method (20) according to claim 6, further comprising,
receiving a decision message (52) from the device comprising an instruction to the network equipment to configure resources based on at least one of a quality of service requirement set selected at the device, and/or at least one alternative proposal for the quality of service requirement set.

8. The computer implemented method (20) according to one of claims 6 or 7,
wherein generating at least one alternative quality of service requirement set comprises:
for each quality of service requirement parameter in the respective quality of service requirement set for which the communication network does not meet all quality of service parameter requirements:
converting each quality of service requirement parameter into a quality of service requirement vector comprising a predefined number of entries;
evaluating the feasibility of providing a quality of service grant in the network based on values defined by a plurality of combinations taken from the respective quality of service requirement vector; and
removing non-feasible combinations from the respective quality of service requirement vector.

9. The computer implemented method (20) according to one of claims 6 to 8;
wherein generating at least one alternative quality of service requirement set further comprises:
for at least one respective quality of service requirement set for which the communication network does not meet all quality of service parameter requirements:
removing at least one quality of service requirement parameter from the at least one respective quality of service requirement set; and/or adding at least one quality of service requirement parameter to the at least one respective quality of service requirement set.

10. The computer implemented method (20) according to one of claims 6 to 9, further comprising:
mapping the at least one alternative proposal for the quality of service requirement set to a corresponding nearest entry of a quality of service index; and wherein the at least one alternative proposal for the quality of service requirement set transmitted in the response message comprises transmitting the corresponding nearest entry to the device.

11. A device (50), comprising
- a radio interface (52);
- a processor (54); and
- a memory (56);
wherein the processor (54) is configured to obtain, using at least one application function hosted by the processor, one or more quality of service requirement sets of the at least one application function, wherein each quality of service requirement set defines at least one quality of service parameter requirement of a communication network that communicably couples the device to a network equipment; wherein the processor is configured to transmit, via the radio interface, a request message to the network equipment, wherein the request message comprises the one or more quality of service requirement sets; wherein the radio interface is configured to receive, from the network equipment, at least one response message comprising at least one response to the request message, wherein the at least one response message comprises (i) an approval of one or more quality of service requirement sets; and/or (ii) at least one alternative proposal for the quality of service requirement set; wherein the processor is configured to select at least one quality of service requirement set and/or at least one alternative proposal for the quality of service requirement set based on one or multiple requirements of the application function; and wherein the processor is configured to transmit, via the radio interface, a decision message to the network equipment, wherein the decision message comprises an instruction to the network equipment to configure resources based on at least one of the selected quality of service requirement sets, and/or at least one alternative proposal for the quality of service requirement sets.

12. Network equipment, comprising
- a radio interface; and
- a processor;
wherein the processor is configured to receive, from a device, a request message comprising one or more quality of service requirement sets, wherein each quality of service requirement set defines at least one quality of service parameter requirement of a communication network that communicably couples the device to the network equipment;
wherein the processor is configured to determine whether, or not, the communication network can meet all quality of service parameter requirements of the device comprised in each of the quality of service requirement sets;
wherein if, for at least one or a subset of the quality of service requirement sets, the communication network cannot meet all of their respective quality of service parameter requirements:
the processor is configured, for at least one or a subset of the quality of service requirement sets for which the communication network cannot meet all quality of service parameter requirements, to generate at least one alternative quality of service requirement set; and
- wherein the processor is configured to transmit, via the radio interface, at least one response message to the device, wherein the message comprises the at least one alternative quality of service requirement set.

13. A communications system (60), comprising:
- a device (50A) as defined by claim 11;
- network equipment (BS) as defined by claim 12;
- a communications network configured to communicably couple the device to the network equipment.

14. The system (60) according to claim 13,
wherein the device is comprised within a vehicle, an automated guided vehicle, an Internet of Things device, or an uncrewed aerial vehicle.

15. A computer program comprising computer readable instructions which, when executed on a processor, is configured to cause the processor to perform either of one of claims 1 to 5, or of one of claims 6 to 10.
